# EUROPÄISCHE PATENTSCHRIFT

(11) **EP 2 614 265 B1**
(45) Veröffentlichungstag und Bekanntmachung des Hinweises auf die Patenterteilung: **25.02.2015**
(21) Anmeldenummer: 11767162.8
(22) Anmeldetag: 05.09.2011
(51) Int. Cl.: F16C 3/02, F16D 1/076

(54) **WELLE ZUM ÜBERTRAGEN VON DREHMOMENTEN**
SHAFT FOR TRANSMISSION OF TORQUE
ARBRES POUR LA TRANSMISSION DE COUPLE

(30) Priorität: 06.09.2010 DE 102010044464
(43) Veröffentlichungstag der Anmeldung: 17.07.2013
(73) Patentinhaber: Hackforth GmbH, 44653 Herne (DE)
(72) Erfinder: LUTZ, Günther, A-6071 Aldrans (AT)
(74) Vertreter: Isfort, Olaf
(86) Internationale Anmeldenummer: PCT/EP2011/004457
(87) Internationale Veröffentlichungsnummer: WO 2012/031730

(56) Entgegenhaltungen:
- EP-A1- 0 385 839
- DE-A1- 4 009 031
- DE-U1- 29 708 324
- US-A- 5 665 187

## Beschreibung

Die Erfindung betrifft eine Welle zum Übertragen von Drehmomenten mit einer Hohlwelle aus faserverstärktem Kunststoff, wobei wenigstens an einem Ende der Hohlwelle ein Flansch befestigt ist, über den die Hohlwelle mit einem antreibenden oder angetriebenen Maschinenteil verbindbar ist.

Die Erfindung betrifft weiter eine Welle zum Übertragen von Drehmomenten mit wenigstens zwei einendig über zumindest einen Flansch miteinander verbundenen Hohlwellen aus faserverstärktem Kunststoff, die koaxial zu der Längsachse der Welle angeordnet sind.

Eine derartige Welle ist beispielsweise aus DE 297 08 324 U1 bekannt. Die Hohlwelle ist über radiale Bolzen mit einem zur Rotationsachse der Hohlwelle konzentrischen Hülsenabschnitt eines Flansches verbunden, wobei hierzu sowohl in der Hohlwelle als auch in dem Hülsenabschnitt eine radiale Durchgangsbohrung angeordnet ist. Die Welle weist gegenüber herkömmlichen Wellen, welche vollständig aus Metall gebildet sind, ein relativ geringes Gewicht auf. Trotzdem weist die Hohlwelle gute Festigkeitseigenschaften und ein gutes Ermüdungsverhalten auf. Eine derartige Welle eignet sich beispielsweise besonders für den Einsatz im Schiffsbau.

Aus der DE 40 09 031 A1 ist eine Hohlwelle aus faserverstärktem Kunststoff bekannt, an deren Stirnseite ein Flansch anschraubbar ist, wobei sich der Schaft der Schraube in Axialrichtung der Hohlwelle innerhalb des Materials seines Mantels erstreckt.

Aufgabe der Erfindung ist es, eine neuartige Welle zum Übertragen von Drehmomenten bereitzustellen, welche zumindest unter Beibehaltung der bislang bekannten Robustheit einer Welle leichter und kostengünstiger herstellbar als herkömmliche Wellen ist.

Diese Aufgabe wird durch eine Welle zum Übertragen von Drehmomenten der eingangs genannten Art dadurch gelöst, dass der Flansch mittels einer Mehrzahl von Schraubverbindungen an der Stirnseite eines Endes der Hohlwelle befestigt ist, wobei jede Schraubverbindung eine Schraube und eine Mutter aufweist, wobei der Schaft der Schraube durch eine in dem Verbindungsbereich zwischen Stirnseite des Endes der Hohlwelle und Flansch angeordnete Öffnung an dem Flansch in Richtung der Hohlwelle ragt, sich zumindest teilweise innerhalb des Mantels der Hohlwelle erstreckt und mit der in einer radialen Bohrung an der Hohlwelle angeordneten Mutter zusammenwirkt, und wobei sich der Kopf der Schraube an der von der Hohlwelle abgewandten Seite des Flansches abstützt.

Bei der erfindungsgemäßen Welle ist der Flansch, welcher vorzugsweise aus einem metallischen Werkstoff, einem Faserverbundstoff oder einem Thermoplasten hergestellt ist, nicht über einen konzentrischen Hülsenabschnitt mit der Hohlwelle verbunden, wie es beispielsweise aus DE 297 08 324 U1 bekannt ist. Ein solcher konzentrischer Hülsenabschnitt ist gemäß der Erfindung nicht erforderlich. Der Flansch kann gemäß der Erfindung im Wesentlichen eben ausgebildet sein. Somit weist der Flansch und damit die gesamte Welle ein gegenüber herkömmlichen Wellen deutlich reduziertes Gewicht auf. Des Weiteren müssen keine radialen Bohrungen in dem konzentrischen Hülsenabschnitt aus Metall angeordnet werden, wie es beim Stand der Technik erforderlich ist. Dadurch ist die Herstellung der erfindungsgemäßen Welle mit einem deutlich geringeren Fertigungsaufwand verbunden. Beide Vorteile gehen zudem mit einer Kostenersparnis bei der Herstellung der erfindungsgemäßen Welle einher.

Der Schaft der Schraube ragt erfindungsgemäß durch eine in dem Verbindungsbereich zwischen Stirnseite des Endes der Hohlwelle und Flansch angeordnete Öffnung an dem Flansch in Richtung der Hohlwelle und erstreckt sich zumindest teilweise innerhalb des Mantels der Hohlwelle. Letzteres bedeutet, dass sich der Schaft der Schraube innerhalb des Materials des Mantels der Hohlwelle erstreckt, wobei der Mantel eine bestimmte, für den jeweiligen Einsatzzweck der Hohlwelle geeignete Mantelstärke aufweist. Beispielsweise ist der Schaft der Schraube parallel und beabstandet zur Längsachse der Hohlwelle angeordnet. Alternativ kann der Schaft der Schraube auch unter einem bestimmten Winkel zur Längsachse der Hohlwelle ausgerichtet sein. Der Winkel ist hierbei in einer senkrecht zum radialen Abstand vom Schaft der Schraube zur Längsachse der Hohlwelle ausgerichteten Ebene angeordnet. Für eine ideale Übertragung von Schubkräften ist die Wahl eines ±45°-Winkels zwischen Schaft der Schraube und Längsachse der Hohlwelle von Vorteil, wobei die Wahl des Vorzeichens von der jeweiligen Drehrichtung der Welle abhängt.

Gemäß einer vorteilhaften Ausgestaltung der Erfindung ist die Schraube wenigstens einer Schraubverbindung als Dehnschraube ausgebildet. Eine Dehnschraube kann zeitlich wechselnde Belastungen durch vorwiegend elastische Verformungen ihres Schaftes aufnehmen. Vorzugsweise ist die Schraube jeder Schraubverbindung als Dehnschraube ausgebildet.

Eine weitere vorteilhafte Ausgestaltung der Erfindung sieht vor, dass die Mutter wenigstens einer Schraubverbindung als Querbolzen mit einem Innengewinde ausgebildet ist, der in der radialen Bohrung an der Hohlwelle angeordnet ist. Zur Herstellung der Welle kann der Querbolzen in der radialen Bohrung, welche auch als Durchgangsbohrung ausgebildet sein kann, angeordnet werden, wonach die Schraube in das Innengewinde an dem Querbolzen eingeschraubt werden kann. Der Querbolzen kann beispielsweise zylinderförmig ausgebildet sein, wobei die Zylinderachse vorzugsweise radial zur Längsachse der Hohlwelle angeordnet ist.

Alternativ wird vorgeschlagen, dass zusätzlich zu Schraube und Mutter ein Querbolzen mit einer Durchgangsbohrung ohne Innengewinde vorgesehen ist, der in der radialen Bohrung an der Hohlwelle angeordnet ist. Der Querschnitt der radialen Bohrung an der Hohlwelle kann in diesem Fall elliptisch geformt sein. Die Mutter der Schraubverbindung stützt sich hierbei auf der dem Flansch abgewandten Seite des Querbolzens ab.

Nach einer weiteren vorteilhaften Ausgestaltung der Erfindung ist das Ende der Hohlwelle mit dem an ihm befestigten Flansch zusätzlich stoffschlüssig verbunden. Vorzugsweise ist die stoffschlüssige Verbindung durch eine Verklebung unter Verwendung eines Epoxidharzes oder eines anaeroben Klebstoffsystems gegeben. Das Vorsehen einer stoffschlüssigen Verbindung zwischen Flansch und Hohlwelle begünstigt die Eigenschaften der Welle zum Übertragen von Drehmomenten bezüglich ihrer Robustheit und der Höhe des übertragbaren Drehmoments deutlich. Als Epoxidharz kann beispielsweise ein zweikomponentiger Epoxidharz verwendet werden.

Ferner wird vorgeschlagen, das Ende der Hohlwelle mit dem an ihm befestigten Flansch formschlüssig zu verbinden. Im beispielhaften Fall eines Flansches aus Stahl kann der Formschluss zum Beispiel als Mikroformschluss durch Rändeln des Stahlflansches oder durch eine andere Methode zum Aufrauhen der Kontaktfläche des Stahlflansches mit der Stirnseite der Hohlwelle hergestellt werden.

Die obige Aufgabe wird weiter durch eine Welle der zweiten eingangs genannten Art dadurch gelöst, dass die Hohlwellen mittels einer Mehrzahl von Schraubverbindungen miteinander verbunden sind, wobei jede Schraubverbindung eine Schraube und eine Mutter aufweist, wobei der Kopf der Schraube in einer radialen Bohrung in der ersten Hohlwelle angeordnet ist, wobei der Schaft der Schraube sich im Wesentlichen innerhalb der Mäntel der beiden Hohlwellen und durch eine im Verbindungsbereich der Stirnseiten der einander zugewandten Enden der Hohlwellen mit dem Flansch angeordnete Öffnung an dem Flansch erstreckt und mit der in einer radialen Bohrung an der zweiten Hohlwelle angeordneten Mutter zusammenwirkt.

Diese erfindungsgemäße Welle ist leichter und kostengünstiger herstellbar als herkömmliche Wellen, da der zwischen ihnen angeordnete Flansch auf ein Mindestmaß reduziert werden kann. Beispielsweise ist der Flansch kreisringförmig und eben ausgebildet, wobei seine Ringbreite etwa derjenigen der ebenfalls kreisringförmig ausgebildeten Stirnseite eines Endes einer der beiden Hohlwellen entspricht. Diese erhebliche Masseneinsparung im Verbindungsbereich der beiden Hohlwellen führt zu einer wünschenswerten Reduzierung der Biegeeigenfrequenz der gesamten Welle.

Auch hier bedeutet das Merkmal, dass sich der Schaft der Schraube im Wesentlichen innerhalb der Mäntel der beiden Hohlwellen erstreckt, dass sich der Schaft der Schraube innerhalb des Materials des Mantels der beiden Hohlwellen erstreckt, wobei die Mäntel eine bestimmte, für den jeweiligen Einsatzzweck der Welle geeignete Mantelstärke aufweisen. Beispielsweise ist der Schaft der Schraube parallel und beabstandet zur Längsachse der Welle angeordnet. Alternativ kann der Schaft der Schraube auch unter einem bestimmten Winkel zur Längsachse der Welle ausgerichtet sein. Der Winkel ist hierbei in einer senkrecht zum radialen Abstand vom Schaft der Schraube zur Längsachse der Welle ausgerichteten Ebene angeordnet. Für eine ideale Übertragung von Schubkräften ist die Wahl eines ±45°-Winkels zwischen Schaft der Schraube und Längsachse von Vorteil, wobei die Wahl des Vorzeichens von der jeweiligen Drehrichtung der Welle abhängt.

Gemäß einer vorteilhaften Ausgestaltung der Erfindung weist die Schraube einen den Schaft umfassenden Dehnbolzen und einen den Kopf bildenden Querbolzen auf, wobei der Querbolzen an dem Dehnbolzen befestigt ist. Der Dehnbolzen kann zeitlich wechselnde Belastungen durch vorwiegend elastische Verformungen aufnehmen. Vorzugsweise ist der Querbolzen zylinderförmig ausgebildet, wobei die Zylinderachse bevorzugt radial zur Längsachse der Welle angeordnet ist. Vorzugsweise entspricht die Außenkontur des Querbolzens der Innenkontur der radialen Bohrung.

Eine weitere vorteilhafte Ausgestaltung der Erfindung sieht vor, dass wenigstens eine Schraubverbindung einen Querbolzen mit einer Durchgangsbohrung aufweist, der in der radialen Bohrung an der zweiten Hohlwelle angeordnet ist und an dessen der ersten Hohlwelle abgewandten Seite sich die Mutter abstützt. Vorzugsweise ist die radiale Bohrung an der zweiten Hohlwelle als Langloch ausgebildet.

Nach einer weiteren vorteilhaften Ausgestaltung der Erfindung sind die Stirnseiten der einander zugewandten Enden der Hohlwellen stoffschlüssig mit dem Flansch verbunden. Vorzugsweise sind die stoffschlüssigen Verbindungen durch Verklebungen unter Verwendung eines Epoxidharzes oder eines anaeroben Klebstoffsystems gegeben. Dies ist mit den oben genannten Vorteilen verbunden.

Gemäß einer weiteren vorteilhaften Ausgestaltung der Erfindung sind die Stirnseiten der einander zugewandten Enden der Hohlwellen formschlüssig mit dem Flansch verbunden. Vorzugsweise besteht der Flansch aus Stahl und sind die formschlüssigen Verbindungen als Mikroformschlüsse ausgebildet, die durch Rändeln oder eine sonstige Methode zum Aufrauhen des Flansches hergestellt sind.

Ferner wird es als vorteilhaft erachtet, wenn der Flansch aus zwei gleich ausgebildeten und koaxial angeordneten Flanschteilen besteht, wobei die erste Hohlwelle mit einem ersten Flanschteil und die zweite Hohlwelle mit einem zweiten Flanschteil verbunden ist. Vorzugsweise sind die beiden Flanschteile formschlüssig miteinander verbunden.

Weitere Merkmale der Erfindung werden im Folgenden anhand der in den beigefügten Figuren gezeigten Ausführungsbeispielen für die erfindungsgemäße Welle zum Übertragen von Drehmomenten näher erläutert. Dabei zeigen
- Figur 1:: einen Längsschnitt eines Ausführungsbeispiels für die erfindungsgemäße Welle, und
- Figur 2:: einen Ausschnitt eines im Längsquerschnitt dargestellten weiteren Ausführungsbeispiels für die erfindungsgemäße Welle.

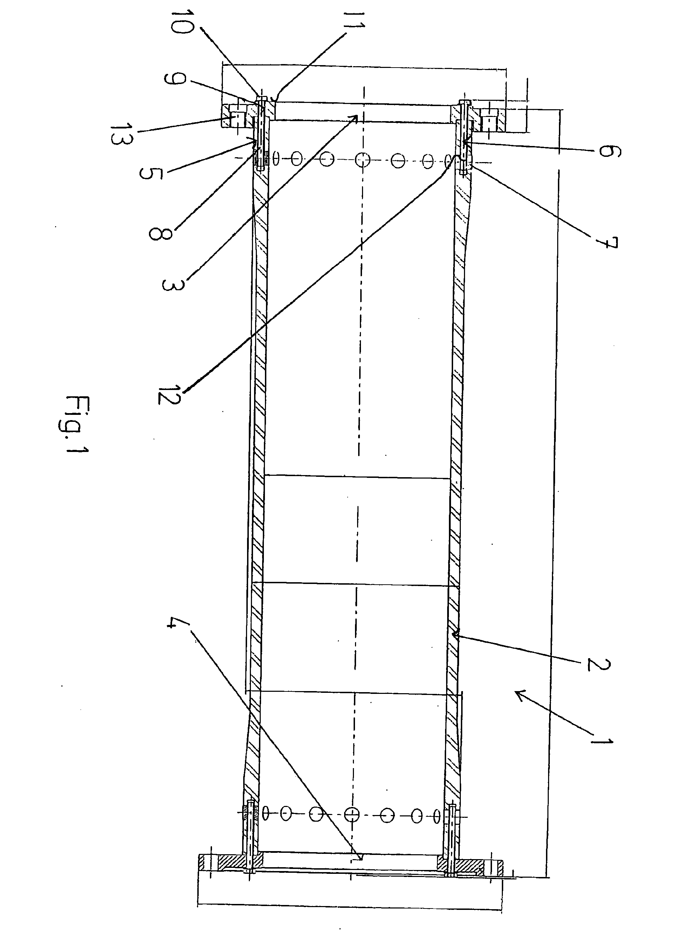

Figur 1 zeigt einen Längsschnitt durch ein Ausführungsbeispiel für die erfindungsgemäße Welle 1 zum Übertragen von Drehmomenten. Die Welle 1 weist eine Hohlwelle 2 aus faserverstärktem Kunststoff auf, an deren Enden jeweils ein metallischer und im Wesentlichen eben ausgebildeter Flansch 3 beziehungsweise 4 befestigt ist. Jeder Flansch 3 beziehungsweise 4 ist mittels einer Mehrzahl von Schraubverbindungen 5 an der Hohlwelle 2 befestigt.

Jede Schraubverbindung 5 weist eine Schraube 6 und eine Mutter 7 auf. Der Schaft 8 der Schraube 6 ragt durch eine Öffnung 9 in dem jeweiligen Flansch 3 beziehungsweise 4. Der Schaft 8 ist parallel und beabstandet zur Längsachse A der Hohlwelle 2 angeordnet. Der Schaft 8 erstreckt sich wenigstens teilweise innerhalb der Hohlwelle 2 und wirkt mit der an der Hohlwelle 2 angeordneten Mutter 7 zusammen. Der Kopf 10 der Schraube 6 stützt sich an der der Hohlwelle 2 abgewandten Seite 11 des jeweiligen Flansches 3 beziehungsweise 4 ab.

Die Schrauben 6 der Schraubverbindungen 5 sind als Dehnschrauben ausgebildet. Die Muttern 7 der Schraubverbindungen 5 sind als Querbolzen mit einem Innengewinde ausgebildet und jeweils in einer radialen Bohrung 12 an der Hohlwelle 2 angeordnet.

Jedes Ende der Hohlwelle 2 ist mit dem jeweilig an ihm befestigten Flansch 3 beziehungsweise 4 zusätzlich unter Verwendung eines zweikomponentigen Epoxidharzes verklebt. Der Epoxidharz ist zwischen den stirnseitigen Flächen der Enden der Hohlwelle 2 und den Flanschen 3 beziehungsweise 4 angeordnet. Die Hohlwelle 2 weist an ihren Endbereichen eine größere Materialstärke als im mittleren Bereich auf, um die Robustheit der Schraubverbindungen zu erhöhen. Zusätzlich zur Verklebung ist jedes Ende der Hohlwelle 2 mit dem jeweilig an ihm befestigten Flansch 3 beziehungsweise 4 formschlüssig verbunden.

Die Flansche 3 und 4 weisen Durchtrittsöffnungen 13 auf, über welche die Welle 1 mit antreibenden oder angetriebenen Maschinenkomponenten verbunden werden kann.

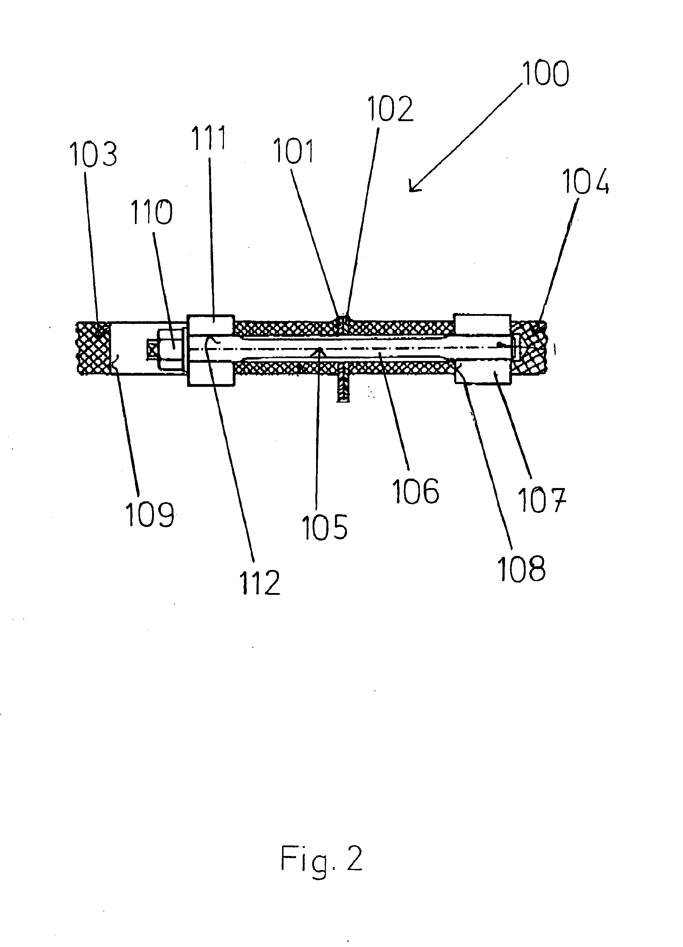

Figur 2 zeigt einen Ausschnitt eines im Längsquerschnitt dargestellten weiteren Ausführungsbeispiels für die erfindungsgemäße Welle 100 zum Übertragen von Drehmomenten. Die Welle 100 weist zwei einendig über die Flanschteile 101 und 102 miteinander verbundene Hohlwellen 103 und 104 aus faserverstärktem Kunststoff auf. Die Hohlwellen 103 und 104 sind koaxial zur Längsachse der Welle 100 angeordnet. Die Hohlwellen 103 und 104 sind mittels einer Mehrzahl von Schraubverbindungen 105 miteinander verbunden, von denen in Figur 2 nur eine dargestellt ist.

Die Schraubverbindung 105 weist eine Schraube auf, die durch einen den Schaft der Schraube umfassenden Dehnbolzen 106 und einen den Kopf bildenden Querbolzen 107 gegeben ist. Der Querbolzen 107 ist an dem Dehnbolzen 106 befestigt und in einer radialen Durchgangsbohrung 108 der ersten Hohlwelle 104 angeordnet. Der durch den Dehnbolzen 106 gebildete Schaft der Schraube ist parallel und beabstandet zur Längsachse der Welle 100 angeordnet, erstreckt sich innerhalb der beiden Hohlwellen 103 und 104 und wirkt mit der in einer radialen Öffnung 109 an der zweiten Hohlwelle 103 angeordneten Mutter 110 der Schraubverbindung 105 zusammen, wobei die radiale Bohrung 109 an der zweiten Hohlwelle 103 als in Längserstreckung der Welle 100 ausgerichtetes Langloch ausgebildet ist. Die Schraubverbindung 105 weist ferner einen Querbolzen 111 mit einer Durchgangsbohrung 112 auf. Die Mutter 110 stützt sich an der der ersten Hohlwelle 104 abgewandten Seite des Querbolzens 111 ab.

Die Stirnseite des der zweiten Hohlwelle 103 zugewandten Endes der ersten Hohlwelle 104 ist stoff- und formschlüssig mit dem ersten Flanschteil 102 verbunden. Die Stirnseite des der ersten Hohlwelle 104 zugewandten Endes der zweiten Hohlwelle 103 ist stoff- und formschlüssig mit dem zweiten Flanschteil 101 verbunden.

Die Flanschteile 101 und 102 sind gleich ausgebildet und koaxial angeordnet. Sie sind formschlüssig miteinander verbunden.

Die anhand der Figuren beschriebenen Ausführungsbeispiele dienen der Erläuterung und sind nicht beschränkend.

## Patentansprüche

1. Welle (1) zum Übertragen von Drehmomenten mit einer Hohlwelle (2) aus faserverstärktem Kunststoff, wobei wenigstens an einem Ende der Hohlwelle (2) ein Flansch (3, 4) befestigt ist, über den die Hohlwelle (2) mit einem antreibenden oder angetriebenen Maschinenteil verbindbar ist,
**dadurch gekennzeichnet,**
**dass** der Flansch (3, 4) mittels einer Mehrzahl von Schraubverbindungen (5) an der Stirnseite eines Endes der Hohlwelle (2) befestigt ist, wobei jede Schraubverbindung (5) eine Schraube (6) und eine Mutter (7) aufweist, wobei der Schaft (8) der Schraube (6) durch eine in dem Verbindungsbereich zwischen Stirnseite des Endes der Hohlwelle (2) und Flansch (3, 4) angeordnete Öffnung (9) an dem Flansch (3, 4) in Richtung der Hohlwelle (2) ragt, sich zumindest teilweise innerhalb des Materials des Mantels der Hohlwelle (2) erstreckt und mit der einer radialen Bohrung (12) an der Hohlwelle (2) angeordneten Mutter (7) zusammenwirkt, und wobei sich der Kopf (10) der Schraube (6) an der der Hohlwelle (2) abgewandten Seite (11) des Flansches (3, 4) abstützt.

2. Welle (1) nach Anspruch 1, **dadurch gekennzeichnet, dass** die Schraube (6) wenigstens einer Schraubverbindung (5) als Dehnschraube ausgebildet ist.

3. Welle (1) nach Anspruch 1 oder 2, **dadurch gekennzeichnet, dass** die Mutter (7) wenigstens einer Schraubverbindung (5) als Querbolzen mit einem Innengewinde ausgebildet ist, der in der radialen Bohrung (12) an der Hohlwelle (2) angeordnet ist.

4. Welle (1) nach Anspruch 1 oder 2, **dadurch gekennzeichnet, dass** wenigstens eine Schraubverbindung (5) einen Querbolzen mit einer Durchgangsbohrung ohne Innengewinde aufweist, an dessen dem Flansch (3, 4) abgewandten Seite sich die Mutter (7) abstützt.

5. Welle (1) nach einem der vorhergehenden Ansprüche, **dadurch gekennzeichnet, dass** das Ende der Hohlwelle (2) mit dem an ihm befestigten Flansch (3, 4) stoffschlüssig verbunden ist.

6. Welle (1) nach einem der vorhergehenden Ansprüche, **dadurch gekennzeichnet, dass** das Ende der Hohlwelle (2) mit dem an ihm befestigten Flansch (3, 4) formschlüssig verbunden ist.

7. Welle (100) zum Übertragen von Drehmomenten mit wenigstens zwei einendig über zumindest einen Flansch miteinander verbundenen Hohlwellen (103, 104) aus faserverstärktem Kunststoff, die konzentrisch zu der Längsachse der Welle (100) angeordnet sind,
**dadurch gekennzeichnet,**
**dass** die Stirnseiten der einander zugewandten Enden der Hohlwellen (103, 104) über den Flansch mittels einer Mehrzahl von Schraubverbindungen (105) miteinander verbunden sind, wobei jede Schraubverbindung (105) eine Schraube und eine Mutter (110) aufweist, wobei der Kopf der Schraube in einer radialen Bohrung (108) in der ersten Hohlwelle (104) angeordnet ist, wobei der Schaft der Schraube sich im Wesentlichen innerhalb des Materials der Mäntel der beiden Hohlwellen (103, 104) und durch eine im Verbindungsbereich der Stirnseiten der einander zugewandten Enden der Hohlwellen (103, 104) mit dem Flansch angeordnete Öffnung an dem Flansch erstreckt und mit der in einer radialen Bohrung (109) an der zweiten Hohlwelle (103) angeordneten Mutter (110) zusammenwirkt.

8. Welle (100) nach Anspruch 7, **dadurch gekennzeichnet, dass** die Schraube wenigstens einer Schraubverbindung (105) einen den Schaft umfassenden Dehnbolzen (106) und einen den Kopf bildenden Querbolzen (107) aufweist, wobei der Querbolzen (107) an dem Dehnbolzen (106) befestigt ist.

9. Welle (100) nach Anspruch 7 oder 8, **dadurch gekennzeichnet, dass** wenigstens eine Schraubverbindung (105) einen Querbolzen (111) mit einer Durchgangsbohrung (112) aufweist, der in der radialen Bohrung (109) an der zweiten Hohlwelle (103) angeordnet ist und an dessen der ersten Hohlwelle (104) abgewandten Seite sich die Mutter (110) abstützt.

10. Welle (100) nach einem der Ansprüche 7 bis 9, **dadurch gekennzeichnet, dass** die radiale Bohrung (109) an der zweiten Hohlwelle (103) als Langloch ausgebildet ist.

11. Welle (100) nach einem der Ansprüche 7 bis 10, **dadurch gekennzeichnet, dass** die Stirnseiten der einander zugewandten Enden der Hohlwellen (103, 104) stoffschlüssig mit dem Flansch verbunden sind.

12. Welle (100) nach einem der Ansprüche 7 bis 11, **dadurch gekennzeichnet, dass** die Stirnseiten der einander zugewandten Enden der Hohlwellen (103, 104) formschlüssig mit dem Flansch verbunden sind.

13. Welle (100) nach einem der Ansprüche 7 bis 12, **dadurch gekennzeichnet, dass** der Flansch aus zwei gleich ausgebildeten und koaxial angeordneten Flanschteilen (101, 102) besteht, wobei die erste Hohlwelle (104) mit einem ersten Flanschteil (102) und die zweite Hohlwelle (103) mit dem zweiten Flanschteil (101) verbunden ist.

14. Welle (100) nach Anspruch 13, **dadurch gekennzeichnet, dass** die beiden Flanschteile (101, 102) formschlüssig miteinander verbunden sind.

15. Welle (100) nach einem der Ansprüche 7 bis 14, **dadurch gekennzeichnet, dass** die Welle (100) gemäß einem der Ansprüche 1 bis 6 ausgestaltet ist.

## Claims

1. A shaft (1) for transmitting torques, comprising a hollow shaft (2) made of fibre-reinforced plastic, wherein a flange (3, 4) which can be used to connect the hollow shaft (2) to a driving or driven machine part is fastened at least to one end of the hollow shaft (2)
**characterized in that**
the flange (3, 4) is fastened to the front edge of one end of the hollow shaft (2) by means of a plurality of screw connections (5), wherein each screw connection (5) comprises a screw (6) and a nut (7), wherein the shank (8) of the screw (6) projects in the direction of the hollow shaft (2) through an opening (9) in the flange (3, 4) that is arranged in the connection region between the end edge of the hollow shaft (2) and the flange (3, 4), and extends at least partially inside the inside the material of the shell of the hollow shaft (2) and engages with the nut (7) arranged in a radial bore at the hollow shaft (2), and wherein the head (10) of the screw (6) is supported on that side (11) of the flange (3, 4) opposed to the hollow shaft (2).

2. A shaft (1) as defined in claim 1, **characterized in that** the screw (6) of at least one screw connection (5) is configured as an expansion screw.

3. A shaft (1) as defined in claim 1 or 2, **characterized in that** the nut (7) of at least one screw connection (5) is configured as a crossway bolt with a female thread, said crossway bolt being arranged in the radial bore (12) at the hollow shaft (2).

4. A shaft (1) as defined in claim 1 or 2, **characterized in that** at least one screw connection (5) comprises a crossway bolt with a passage bore without female thread, at the side of which opposed to the flange (3, 4) the nut (7) is supported.

5. A shaft (1) as defined in any of the preceding claims, **characterized in that** the end of the hollow shaft (2) is frictionally connected to the flange (3, 4) which is fastened to it.

6. A shaft (1) as defined in any of the preceding claims, **characterized in that** the end of the hollow shaft (2) is positive-lock connected to the flange (3, 4) which is fastened to it.

7. A shaft (100) for transmitting torques, comprising at least two hollow shafts (103, 104) made of fibre-reinforced plastic connected at one end and connected via at least a flange, the said hollow shafts being arranged concentrically to the longitudinal axis of the shaft (100),
**characterized in that**
the end edges of the hollow shaft (103, 104) ends facing each other are connected to each other via the flange by means of a plurality of screw connections (105), wherein each screw connection (105) comprises a screw and a nut (110), wherein the head of the screw is arranged in a radial bore (108) in the first hollow shaft (104), and wherein the shank of the screw mainly extends at the flange inside the inside the material of the shells of the two hollow shafts (103, 104) and through an opening arranged with the flange in the connecting range of the end edges of the ends facing each other of the hollow shafts (103, 104) with the flange and engages with the nut (110) arranged in a radial bore (109) at the second hollow shaft (103).

8. A shaft (100) as defined in claim 7, **characterized in that** the screw of at least one screw connection (105) comprises an expansion bolt (106) comprising the shaft and a crossway bolt (107) forming the head, wherein the crossway bolt (107) is fastened to the expansion bolt (106).

9. A shaft (100) as defined in claim 7 or 8, **characterized in that** at least one screw connection (105) comprises a crossway bolt (111) with a passage bore (112), said bolt being arranged in the radial bore (109) on the second hollow shaft (103) and wherein the nut (110) is supported on the hollow shaft side opposed to the first hollow shaft (104).

10. A shaft (100) as defined in any of the preceding claims 7 to 9, **characterized in that** the radial bore (109) on the second hollow shaft (103) is configured as an oblong hole.

11. A shaft (100) as defined in any of the preceding claims 7 to 10, **characterized in that** the end edges of the hollow shaft (103, 104) ends facing each other are material-to-material connected to the flange.

12. A shaft (100) according to any of the preceding claims 7 to 11, **characterized in that** the end edges of the hollow shaft (103, 104) ends facing each other are positive-lock connected to the flange.

13. A shaft (100) as defined in any of the preceding claims 7 to 12, **characterized in that** the flange is comprised of two equally configured and coaxially arranged flange parts (101, 102), wherein the first hollow shaft (104) is connected to a first flange part (102) and wherein the second hollow shaft (103) is connected to the second flange part (101).

14. A shaft (100) as defined in claim 13, **characterized in that** the two flange parts (101, 102) are positive-lock connected to each other.

15. A shaft (100) as defined in any of the preceding claims 7 to 14, **characterized in that** the shaft (100) is configured in accordance with any of the preceding claims 1 to 6.

## Revendications

1. Arbre (1) pour la transmission de couples avec un arbre creux (2) en matière plastique renforcé de fibres, une bride (3, 4) étant fixée à au moins une extrémité de l'arbre creux (2), par l'intermédiaire de laquelle l'arbre creux (2) peut être relié à une partie de machine entraînante ou entraînée,
**caractérisé en ce que**
la bride (3, 4) est fixée au côté frontal d'une extrémité de l'arbre creux (2) à l'aide d'une pluralité de liaisons vissées (5), chaque liaison vissée (5) comprenant une vis (6) et un écrou (7), la tige (8) de la vis (6) dépassant dans une ouverture (9) disposée dans la partie de liaison entre le côté frontal de l' arbre creux (2) et la bride (3, 4), sur la bride (3, 4) en direction de l' arbre creux (2), s'étend au moins partiellement à l'intérieur du matériau de la surface externe de l'arbre creux (2) et interagit avec un alésage radial (12) et un écrou (7) disposé sur l'arbre creux (2) et la tête (10) de la vis (6) s'appuyant contre le côté (11) de la bride (3, 4) opposé à l'arbre creux (2).

2. Arbre (1) selon la revendication 1, **caractérisé en ce que** la vis (6) d'au moins une liaison vissée (5) est conçue comme un écarteur.

3. Arbre (1) selon la revendication 1 ou 2, **caractérisé en ce que** l'écrou (7) d'au moins une liaison vissée (5) est conçue comme une tige transversale avec un filetage interne, qui est disposé dans l'alésage radial (12) sur l'arbre creux (2).

4. Arbre (1) selon la revendication 1 ou 2, **caractérisé en ce qu'**au moins une liaison vissée (5) comprend une tige transversale avec un alésage de passage sans filetage interne, sur le côté opposé à la bride (3, 4) duquel l'écrou s'appuie.

5. Arbre (1) selon l'une des revendications précédentes, **caractérisé en ce que** l'extrémité de l'arbre creux (2) est reliée par adhérence de matière avec la bride (3, 4) fixée sur celui-ci.

6. Arbre (1) selon l'une des revendications précédentes, **caractérisé en ce que** l'extrémité de l'arbre creux (2) est reliée par complémentarité de forme avec la bride (3, 4) fixée sur celui-ci.

7. Arbre (100) pour la transmission de couples avec au moins deux arbres creux (103, 104) reliés entre eux à une extrémité par l'intermédiaire d'au moins une bride, en matière plastique renforcée de fibres, qui sont disposés de manière concentrique par rapport à l'axe longitudinal de l'arbre (100),
**caractérisé en ce que**
les côtés frontaux des extrémités, orientées entre elles, des arbres creux (103, 104) sont reliées entre elles par l'intermédiaire de la bride à l'aide d'une pluralité de liaisons vissées (105), chaque liaison vissée (105) comprenant une vis et un écrou (110), la tête de la vis étant disposée dans un alésage axial (108) du premier arbre creux (104), la tige de la vis s'étendant globalement à l'intérieur du matériau des surfaces externes des deux arbres creux (103, 104) et, sur la bride, à travers une ouverture disposée dans partie de liaison des côtés frontaux des extrémités, orientées entre elles, des arbres creux (103, 104), avec la bride et interagit avec l'écrou (110) disposé dans un alésage radial (109) sur le deuxième arbre creux (103).

8. Arbre (100) selon la revendication 7, **caractérisé en ce que** la vis d'au moins une liaison vissée (105) comprend une tige extensible (106) comprenant la tige et une tige transversale (107) formant la tête, la tige transversale (107) étant fixée à la tige extensible (106).

9. Arbre (100) selon la revendication 7 ou 8, **caractérisé en ce qu'**au moins une liaison vissée (105) comprend une tige transversale (111) avec un alésage traversant (112), qui est disposée dans l'alésage radial (109) sur le deuxième arbre creux (103) et sur le côté opposé au premier arbre creux (104) duquel s'appuie l'écrou (110) .

10. Arbre (100) selon l'une des revendications 7 à 9, **caractérisé en ce que** l'alésage radial (109) est réalisé sur le deuxième arbre creux (103) sous la forme d'un trou oblong.

11. Arbre (100) selon l'une des revendications 7 à 10, **caractérisé en ce que** les côtés frontaux des extrémités, orientées l'une vers l'autres, des arbres creux (103, 104) sont reliés par adhérence de matière avec la bride.

12. Arbre (100) selon l'une des revendications 7 à 11, **caractérisé en ce que** les côtés frontaux des extrémités, orientées l'une vers l'autres, des arbres creux (103, 104) sont reliés par complémentarité de forme.

13. Arbre (100) selon l'une des revendications 7 à 12, **caractérisé en ce que** la bride est constituée de deux parties de brides (101, 102) identiques et disposées de manière coaxiale, le premier arbre creux (104) étant relié à une première partie de bride (102) et le deuxième arbre creux (103) étant relié à la deuxième partie de bride (101) .

14. Arbre (100) selon la revendication 13, **caractérisé en ce que** les deux parties de brides (101, 102) sont reliées entre elles par complémentarité de forme.

15. Arbre (100) selon l'une des revendications 7 à 14, **caractérisé en ce que** l'arbre (100) est conçu selon l'une des revendications 1 à 6.
